# EUROPÄISCHE PATENTSCHRIFT

(11) **EP 3 421 306 B1**
(45) Veröffentlichungstag und Bekanntmachung des Hinweises auf die Patenterteilung: **28.04.2021**
(21) Anmeldenummer: 18180752.0
(22) Anmeldetag: 29.06.2018
(51) Int. Cl.: B60S 1/48, B60S 1/50

(54) **IN EINEN FAHRZEUGTANK INTEGRIERTE VORRICHTUNG ZUR VERTEILUNG VON WASCHWASSER**
DEVICE INTEGRATED INTO A VEHICLE TANK FOR DISTRIBUTION OF WASH WATER
DISPOSITIF INTÉGRÉ DANS UN RÉSERVOIR DE VÉHICULE PERMETTANT LA DISTRIBUTION D'EAU DE LAVAGE

(30) Priorität: 29.06.2017 DE 102017114557
(43) Veröffentlichungstag der Anmeldung: 02.01.2019
(73) Patentinhaber: Helbako GmbH, 42579 Heiligenhaus (DE)
(72) Erfinder: Sommrey, Peter, 42489 Wülfrath (DE); Löcken, Martin, 40882 Ratingen (DE)
(74) Vertreter: Schulte & Schulte

(56) Entgegenhaltungen:
- EP-A1- 3 153 361
- DE-A1-102015 015 645
- JP-A- 2004 100 596
- JP-B2- 5 113 719
- US-A- 4 728 260
- US-A1- 2009 159 142

## Beschreibung

Die Erfindung betrifft eine Vorrichtung zur Steuerung der Verteilung von Waschwasser auf mehrere Abnehmer in einem Fahrzeug, wobei die Vorrichtung einen Waschwasserzulauf und eine Mehrzahl von mit dem Waschwasserzulauf koppelbaren und zu den verschiedenen Abnehmern führenden Waschwasserabläufen aufweist.

In Fahrzeugen, vor allem im Automotive-Bereich, gibt es mehrere Abnehmer für Waschwasser, z. B. für die Windschutz-, die Heckscheibe oder die Scheinwerfer. Die Zahl dieser Verbraucher wird zukünftig sogar noch zunehmen, da weitere Einrichtungen in einem Fahrzeug das regelmäßige Reinigen mit Waschwasser erfordern. Zu denken ist dabei etwa an Kameras oder Sensoren, nicht zuletzt vor dem Hintergrund der steigenden Tendenz zum autonomen Fahren. Bekannt ist daher aus der EP 3 153 361 ein Verfahren und eine Vorrichtung zur Steuerung der Verteilung von Waschwasser, wobei ein Waschwasserzulauf mit jeweils einem von mehreren, zu verschiedenen Abnehmern führenden Waschwasserabläufen gekoppelt wird. Je nach Bedarf wird der Waschwasserzulauf mit demjenigen Waschwasserablauf gekoppelt, der zu dem betreffenden Abnehmer bzw. Verbraucher führt, den es mit Waschwasser zu versorgen gilt. Als problematisch hat sich dabei die Verbindung zwischen Wassertank und der Vorrichtung zur Steuerung der Verteilung des Waschwassers erwiesen. Es sind erhebliche Anpassungen an die unterschiedlichen Typen von Wassertanks mit ihrer jeweiligen speziellen Geometrie notwendig. Die Installation der Vorrichtung mit ihren Peripheriekomponenten ist daher aufwendig und teuer.

US 4 728 260 A offenbart den Oberbegriff des Anspruchs 1.

Damit stellt sich der vorliegenden Erfindung die Aufgabe, eine Vorrichtung zur Steuerung der Verteilung von Waschwasser auf mehrere Abnehmer in einem Fahrzeug zu schaffen, die sich durch Kompaktheit, vereinfachte Montage und eines Erweiterung des Funktionsumfangs auszeichnet.

Diese Aufgabe wird dadurch gelöst, dass die Vorrichtung in ein Gehäuse integriert ist, welches innen oder außen an der Wandung eines in dem Fahrzeug installierten Tanks zur Vorhaltung des Waschwassers fixierbar ist.

Kern der Erfindung ist die Integration der als Waschwasserweiche ausgebildeten Vorrichtung ggf. nebst weiterer Aggregate in ein als Gleichteil ausgebildetes Gehäuse, das vorzugsweise innen oder auch außen an der Wandung des Tanks zur Vorhaltung des Waschwassers fixierbar ist. Dieses Gehäuse baut kompakt und zugleich einfach, sodass eine Anpassung der Vorrichtung bzw. der Komponenten für unterschiedlich Tanktypen und -großen weitgehend entfällt. Das Gehäuse samt Komponenten kann dabei an der Innenseite des Tanks über geeignete Befestigungsmittel integriert werden, ohne dass eine Anpassung der Vorrichtung, der Komponenten oder gar des Tanks dafür notwendig wäre. Mit der Erfindung geht außerdem eine erhebliche Reduzierung des Verkabelungsaufwandes einher, was zu einer noch weitergehenden Reduzierung der Montagezeiten führt. Durch die Reduzierung der Variantenvielfalt dank Zusammenlegung von Aggregaten und die Erweiterung des Funktionsumfangs können erheblich Kosten eingespart werden.

Die verschiedenen Komponenten, die der Vorrichtung zugeordnet werden bzw. mit dieser in dem Gehäuse untergebracht sind, wurden bereits angesprochen. In diesem Sinne wird vorgeschlagen, dass über die Vorrichtung hinaus in dem Gehäuse eine Elektroeinheit angeordnet ist. Während die Pumpe zur Versorgung des Waschwassers dient, erfüllt die Elektroeinheit u. a. die Aufgabe, die verschiedenen Aggregate zu steuern.

Weitere Möglichkeiten ergeben sich dank der erfindungsgemäßen Lösung, wenn in dem Gehäuse eine Heizeinrichtung und/oder eine Sensorik angeordnet sind. Eine Heizeinrichtung erfüllt den primären Zweck, eingefrorenes Waschwasser aufzutauen bzw. das Waschwasser zu erwärmen. Beim Thema Sensorik ist u. a. an Sensoren in Zusammenhang mit der Qualität des Waschwassers, der Konzentration des Frostschutzes, dem Füllstand des Waschwassertanks oder der Feststellung der Funktion dieser Komponenten gedacht. Im Idealfall nimmt das Gehäuse also die eigentliche Vorrichtung (Waschwasserweiche), eine Pumpe, eine Elektroeinheit, eine Heizeinrichtung und die Sensorik auf.

Eine zusätzliche vorteilhafte Ausführungsform der Erfindung sieht vor, dass der Waschwasserzulauf in das Gehäuse integriert ist. Dieser Vorschlag versteht sich dahingehend, dass Waschwasser aus dem Tank zwecks Verteilung auf die Abläufe durch den Zulauf in das Innere des Gehäuses der Vorrichtung gelangen kann.

Ergänzend dazu ist vorgesehen, dass eine Mehrzahl von zu den verschiedenen Abnehmern führenden Waschwasserabläufen in das Gehäuse integriert ist. Wird der Zulauf mit dem zu dem zu versorgenden Abnehmer führenden Waschwasserablauf gekoppelt, gelangt das Waschwasser aus dem Gehäuse in Richtung Abnehmer, weshalb es sinnvoll ist, wenn eine Mehrzahl von zu den Abnehmern führenden Waschwasserabläufen bzw. Leitungen und Schläuche, welche die Vorrichtung mit den Abnehmern verbinden, in das Gehäuse integriert ist.

Es wurde bereits angesprochen, dass ein maßgeblicher Vorteil der erfindungsgemäßen Vorrichtung darin liegt, dass selbige und die ihr zugeordneten Aggregate in dem Schutzgehäuse kompakt untergebracht sind, sodass ein solches Gehäuse auf denkbar einfache Weise außen oder innen an dem Wassertank fixiert werden kann. Es ist daher vorgesehen, dass Vorrichtung, Pumpe, Elektroeinheit, Heizeinrichtung, Sensorik, Waschwasserzulauf und/oder Waschwasserabläufe eine gemeinsame Montagegruppe bilden. Solch eine Baugruppe kann werkseitig vorgefertigt werden und muss dann nur noch an passender Stelle an oder in dem Tank fixiert werden, wobei Anpassungen an Typ oder Größe des Tank dank der Kompaktheit der erfindungsgemäßen Vorrichtung und der klein bauenden Schnittstelle letztlich weitestgehend gleichgültig sind.

Was die Geometrie des Gehäuses betrifft, sieht eine Ausführungsform der Erfindung vor, dass das Gehäuse eine zumindest im Wesentlichen hohlzylindrische Form aufweist, in der möglichst sämtliche, ggf. jedoch auch nur einige Aggregate untergebracht werden können. Dank der hohlzylindrischen Ausbildung des "stehenden" Gehäuses mit den darin vorgesehenen weiteren Aggregaten ist die Kontaktfläche zwischen Tank und Gehäuse denkbar klein, was die Möglichkeiten der Anpassung an verschiedene Tanktypen, -geometrien und - größen drastisch erhöht.

Es wurde bereits darauf hingewiesen, dass ein Vorteil der erfindungsgemäßen Lösung darin liegt, dass die Vorrichtung zur Verteilung von Waschwasser (Waschwasserweiche) ungeachtet von Größe und Geometrie des Wassertanks installierbar ist. Neben einer möglichst kleinen an der Tankwandung zu befestigenden Fläche, d. h. einer klein bauenden Schnittstelle ist es sinnvoll, wenn das Gehäuse an seiner einer Wandung des Tanks zugewandten Stirnseite einen Befestigungsflansch aufweist, mit dem auf besonders gut geeignete und sichere Weise die Fixierung des Gehäuses an der Tankwandung bewerkstelligt werden kann.

Konkret sieht dies so aus, dass der Befestigungsflansch über Befestigungsmittel mit einer Wandung des Tanks verbindbar ist. Gedacht ist an Schrauben etc. zur Verbindung des kragenartigen Flansches und der Tankwandung in diesem Bereich. Denkbar sind aber auch Fügeverfahren wie z. B. Kleben oder Schweißen.

Ein weiterer Vorschlag sieht vor, dass das Gehäuse am untersten Punkt des Tanks installiert ist, wobei es mit Blick auf die Vermeidung von Versumpfungen sinnvoll ist, den Zulauf am untersten Punkt des Tanks vorzusehen.

Zusammenfassend könnte man festhalten, dass das Gehäuse als Gleichteil mit standardisierter mechanischer Schnittstelle ausgebildet ist, was dann in Konsequenz genauso für die Vorrichtung zur Verteilung von Waschwasser als solche gilt. Sowohl Gehäuse als auch Vorrichtung nämlich können nunmehr standardisiert hergestellt und weitestgehend von der Geometrie des Wassertanks unabhängig eingesetzt werden.

Die Erfindung zeichnet sich insbesondere dadurch aus, dass eine Vorrichtung zur Steuerung der Verteilung von Waschwasser auf mehrere Abnehmer in einem Fahrzeug geschaffen ist, welche dank Gleichteilkonzept für Träger, Flansch oder Fördereinheit über viele Baureihen einsetzbar ist. Das Gehäuse samt Komponenten kann dabei an der Innen- oder Außenseite des Tanks über geeignete Befestigungsmittel integriert werden, ohne dass eine Anpassung der Vorrichtung, der Komponenten oder gar des Tanks dafür notwendig wäre. Material und Aufwand für die Verkabelung, insbesondere Kabel und Schläuche können reduziert werden. Eine weitgehende Vorkonfektionierung beim Lieferanten und, damit einhergehend, reduzierte Montagezeiten sind möglich. Zugleich können diverse Aggregate rund um die Waschwasserweiche in das Gehäuse der Vorrichtung integriert werden, sodass sie als kompakte Montagegruppe montiert und demontiert werden können.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: das Schema einer Vorrichtung zur Verteilung von Waschwasser
- Figur 2: den Ausschnitt eines Tanks mit installiertem Gehäuse,
- Figur 3: ein Gehäuse und
- Figur 4: ein Funktionsschema.

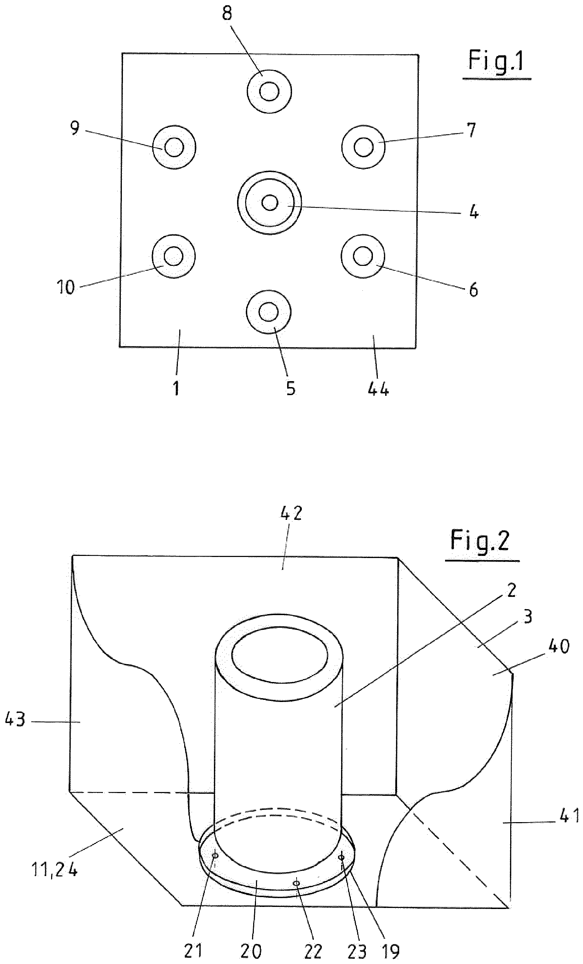

Figur 1 zeigt in einer groben Darstellung ein Gehäuse 2 der auch als Wasserweiche oder Waschwasserweiche zu bezeichnenden Vorrichtung 1 zur Verteilung von Waschwasser, bei dem eine Anschlussplatte 44 mit dem zentralen Waschwasserzulauf 4 und den darum in dieser Ausführungsform kranzartig gruppierten Waschwasserabläufen 5 - 10 erkennbar ist. Je nach Positionierung eines in dem Gehäuse 2 hinter der Anschlussplatte 44 verborgenen Rotationskörpers steht ein zentraler, von dem hier nicht gezeigten Waschwasserspeicher versorgter Waschwasserzulauf 4 mit dem jeweiligen Waschwasserablauf 5 - 10 in Verbindung, sodass das Waschwasser zu dem jeweiligen Verbraucher gelangen kann. Der Zulauf 4 und die Abläufe 5 - 10 weisen dazu entsprechende Anschlüsse auf oder sind als solche ausgebildet, um über Leitungen mit den Verbrauchern verbunden zu werden.

Figur 2 skizziert einen Tank 3 mit vier Wandungen 40, 41, 42, 43 sowie 11. Bei letzterer Wandung 11 handelt es sich um den Tankboden 24. Auf diesem ist ein Gehäuse 2 installiert, dessen Innenleben in Figur 2 nicht dargestellt ist. An seiner Stirnseite 19, mit welcher das Gehäuse 2 auf dem Tankboden 24 im Wege einer vorteilhaft klein bauenden Schnittstelle installiert ist, verfügt das Gehäuse 2 über einen Befestigungsflansch 20, der mit drei beispielhaft bezeichneten Befestigungsmitteln 21, 22, 23 dort fixiert ist. Anschaulich ist damit die optimale Möglichkeit der Anpassung solch eines Gehäuses samt sämtlicher darin befindlicher Komponenten ohne hohen Installationsaufwand und insbesondere mit der Möglichkeit, solch ein Gehäuse 2 unabhängig von der Geometrie des Tanks als Gleichteil an einer von dessen Wandungen außen oder innen zu befestigen.

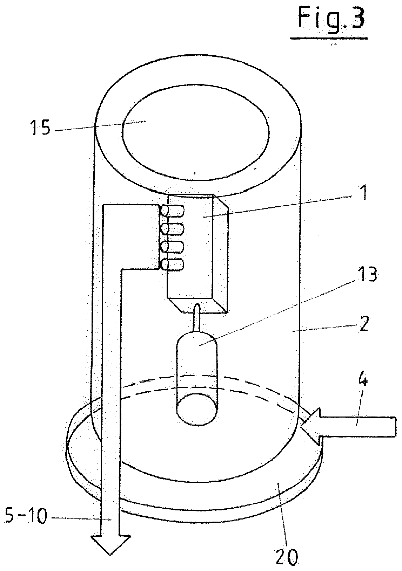

Das Gehäuse 2 zeigt dann Figur 3 mit den verschiedenen Aggregaten. Zunächst mit der Vorrichtung 1 zur Steuerung der Verteilung des Waschwassers auf mehrere Abnehmer/Verbraucher in einem Fahrzeug. Angedeutet ist durch jeweils einen Pfeil der Waschwasserzulauf 4 einerseits und der Waschwasserablauf 5 - 10 andererseits. Neben der Vorrichtung ist in dem Gehäuse auch eine Heizeinrichtung für das Waschwasser zur Vermeidung von Vereisungen zu erkennen. Mit 13 ist eine Pumpe und mit 20 wiederum der Befestigungsflansch bezeichnet.

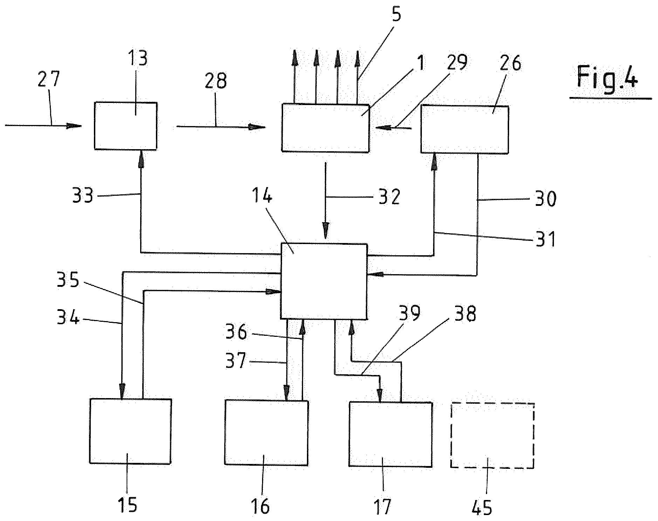

Schließlich zeigt Figur 4 das grobe Schema der angesprochenen Funktionen. Der Pfeil 27 bezeichnet das zur Pumpe 13 gelangende Wasser, das dann, symbolisiert durch den Pfeil 28, in Richtung der Vorrichtung 1 seinen Weg findet. Einer der Waschwasserabläufe ist wiederum vereinfachend mit dem Bezugszeichen 5 versehen. Der Pfeil 29 symbolisiert, dass der Antrieb 26 die Vorrichtung 1 antreibt. Im Zentrum der Darstellung gemäß Figur 4 befindet sich die Elektronikeinheit 14, welche u. a. die Pumpe 13 steuert, zum Ausdruck gebracht durch den Pfeil 33. Der Pfeil 32 symbolisiert das Positionsinfo zwischen Vorrichtung 1 und Elektronikeinheit 14 zur Überprüfung der richtigen Ausrichtung des betreffenden Waschwasserablaufs zu dem jeweiligen Verbraucher. Die Elektronikeinheit 14 übt die gleiche Funktion in Bezug auf den Antrieb 26 aus, siehe Pfeil 30. Gleichzeitig steuert die Elektronikeinheit 14 den Antrieb 26 für die Vorrichtung 1, symbolisiert durch den Pfeil 31. Unten in Figur 4 befinden sich dann weitere in dem Gehäuse der Vorrichtung unterzubringende Aggregate. Zu erwähnen ist zunächst die Heizeinrichtung 15, ebenso gesteuert durch die Elektronikeinheit 14, hier veranschaulicht durch den Pfeil 34, während die Heizeinrichtung 15 ihrerseits Informationen an die Elektronikeinheit 14 liefert, veranschaulicht durch den Pfeil 35. Mit 16 ist ein Sensor zur Überprüfung und Feststellung der Qualität des Waschwassers bezeichnet, dessen Beziehung zur Elektronikeinheit 14 durch die Pfeile 36 und 37 zwischen Elektronikeinheit 14 und Sensorik 16 illustriert ist. Mit dem Bezugszeichen 17 ist die Füllstandssensorik bezeichnet, welche über die Pfeile 38 und 39 mit der Elektronikeinheit in Verbindung steht. Mit 45 und dem entsprechenden Aggregat ist angedeutet, dass weitere vergleichbare Komponenten als Aggregate für eine Vorrichtung zur Verteilung von Waschwasser, sprich für eine Wasserweiche vorhanden sein können.

## Patentansprüche

1. Vorrichtung (1) zur Steuerung der Verteilung von Waschwasser auf mehrere Abnehmer in einem Fahrzeug, wobei die Vorrichtung (1) einen Waschwasserzulauf (4) und eine Mehrzahl von mit dem Waschwasserzulauf (4) koppelbaren und zu den verschiedenen Abnehmern führenden Waschwasserabläufen (5 - 10) aufweist,
**dadurch gekennzeichnet,**
**dass** die Vorrichtung (1) in ein Gehäuse (2) mit darin angeordneter Elektroeinheit (14) integriert ist, welches innen an der Wandung (11) eines in dem Fahrzeug installierten Tanks (3) zur Vorhaltung des Waschwassers fixierbar ist.

2. Vorrichtung nach Anspruch 1,
**dadurch gekennzeichnet,**
**dass** in dem Gehäuse (2) eine Heizeinrichtung (15) und/oder eine Sensorik (16, 17) angeordnet sind.

3. Vorrichtung nach mindestens einem der vorhergehenden Ansprüche,
**dadurch gekennzeichnet,**
**dass** Vorrichtung (1), Pumpe (13), Elektroeinheit (14), Heizeinrichtung (15), Sensorik (16, 17), Waschwasserzulauf (4) und/oder Waschwasserabläufe (5 - 10) eine gemeinsame Montagegruppe bilden.

4. Vorrichtung nach Anspruch 1,
**dadurch gekennzeichnet,**
**dass** das Gehäuse (2) eine zumindest im Wesentlichen hohlzylindrische Form aufweist.

5. Vorrichtung nach Anspruch 1,
**dadurch gekennzeichnet,**
**dass** das Gehäuse (2) an seiner einer Wandung (11) des Tanks (3) zugewandten Stirnseite (19) einen Befestigungsflansch (20) aufweist.

6. Vorrichtung nach Anspruch 5,
**dadurch gekennzeichnet,**
**dass** der Befestigungsflansch (20) über Befestigungsmittel (21, 22, 23) mit einer Wandung (11) des Tanks (3) verbindbar ist.

7. Vorrichtung nach Anspruch 1,
**dadurch gekennzeichnet,**
**dass** das Gehäuse (2) am untersten Punkt des Tanks (3) installiert ist.

8. Vorrichtung nach Anspruch 1,
**dadurch gekennzeichnet,**
**dass** das Gehäuse (2) als Gleichteil mit standardisierter mechanischer Schnittstelle ausgebildet ist.

## Claims

1. Device (1) for controlling the distribution of washing water to several consumers in a vehicle, whereby the device (1) has a washing water inlet (4) and a plurality of washing water drains (5 - 10) coupled with the washing water inlet (4) and leading to the various customers
**characterised in that**
the device (1) is integrated in a housing (2) with an electrical unit (14) arranged therein, which is fixed inside to the wall (11) of a tank installed in the vehicle (3) for the storage of the washing water.

2. Device according to claim 1,
**characterised in that**
a heating device (15) and / or a sensor system (16, 17) are arranged in the housing (2).

3. Device according to at least one of the above claims,
**characterised in that**
the device (1), pump (13), electrical unit (14), heating device (15), sensors (16, 17), washing water inlet (4) and/or washing water drains (5 - 10) form a common assembly group.

4. Device according to claim 1,
**characterised in that**
the housing (2) has at least basically a hollow cylindrical shape.

5. Device according to claim 1,
**characterised in that**
the housing (2) has a fastening flange (20) on its end face (19) facing a wall (11) of the tank (3).

6. Device according to claim 5,
**characterised in that**
the fastening flange (20) can be connected to a wall (11) of the tank (3) via fasteners (21, 22, 23).

7. Device according to claim 1,
**characterised in that**
the housing (2) is installed at the lowest point of the tank (3).

8. Device according to claim 1,
**characterised in that**
the housing (2) is designed as a uniform part with a standardized mechanical interface.

## Revendications

1. Dispositif (1) destiné à commander la distribution de l'eau de lavage sur plusieurs consommateurs dans un véhicule, dans lequel le dispositif (1) présente une alimentation en eau de lavage (4) et une pluralité d'écoulements d'eau de lavage (5 - 10) pouvant être couplés avec l'alimentation en eau de lavage (4) et menant aux différents consommateurs,
**caractérisé en ce que**
le dispositif (1) est intégré dans un boîtier (2) avec une unité électrique (14) qui y est disposée, laquelle peut être fixée à l'intérieur sur la paroi (11) d'un réservoir (3) installé dans le véhicule afin de tenir l'eau de lavage à disposition.

2. Dispositif selon la revendication 1,
**caractérisé en ce que**
un dispositif de chauffage (15) et/ou des capteurs (16, 17) sont disposés dans le boîtier (2).

3. Dispositif selon au moins l'une des revendications précédentes,
**caractérisé en ce que**
le dispositif (1), la pompe (13), l'unité électrique (14), le dispositif de chauffage (15), les capteurs (16, 17), l'alimentation en eau de lavage (4) et/ou les écoulements d'eau de lavage (5 - 10) constituent un groupe de montage commun.

4. Dispositif selon la revendication 1,
**caractérisé en ce que**
le boîtier (2) présente une forme au moins pour l'essentiel cylindrique creuse.

5. Dispositif selon la revendication 1,
**caractérisé en ce que**
le boîtier (2) présente, sur sa face frontale (19) tournée vers la paroi (11) du réservoir (3), une bride de fixation (20).

6. Dispositif selon la revendication 5,
**caractérisé en ce que**
la bride de fixation (20) peut être connectée par des moyens de fixation (21, 22, 23) à une paroi (11) du réservoir (3).

7. Dispositif selon la revendication 1,
**caractérisé en ce que**
le boîtier (2) est installé au point le plus bas du réservoir (3).

8. Dispositif selon la revendication 1,
**caractérisé en ce que**
le boîtier (2) est formé en tant que pièce invariante avec une interface mécanisée standardisée.
